Europäisches Patentamt

European Patent Office

Office européen des brevets

(19)

(11) **EP 0 558 813 B1**

(12) **EUROPÄISCHE PATENTSCHRIFT**

(45) Veröffentlichungstag und Bekanntmachung des Hinweises auf die Patenterteilung:
**24.09.1997 Patentblatt 1997/39**

(51) Int Cl.⁶: **G08C 25/02, B60T 8/88**

(21) Anmeldenummer: **92120968.0**

(22) Anmeldetag: **09.12.1992**

(54) **Verfahren und Vorrichtung zur Ansteuerung und Fehlerrückmeldung eines elektrischen Bauelements**

Method and device for controlling an electric component and for error feedback signaling

Méthode et dispositif de commande d'un composant électrique et de signalisation en retour d'erreurs

(84) Benannte Vertragsstaaten:
**AT DE FR GB IT NL SE**

(30) Priorität: **02.03.1992 DE 4206560**
**07.05.1992 DE 4215075**

(43) Veröffentlichungstag der Anmeldung:
**08.09.1993 Patentblatt 1993/36**

(73) Patentinhaber: **KNORR-BREMSE Systeme für Nutzfahrzeuge GmbH**
**80809 München (DE)**

(72) Erfinder: **Bielig, Peter Michael**
**W-8000 München 19 (DE)**

(74) Vertreter: **von Bülow, Tam, Dr. et al**
**Patentanwaltskanzlei**
**Mailänder Strasse 13**
**81545 München (DE)**

(56) Entgegenhaltungen:
**EP-A- 0 418 665**          **US-A- 3 708 784**

- **UND- ODER- NOR + STEUERUNGSTECHNIK Bd. 23, Nr. 11, November 1990, MAINZ DE Seiten 64 - 65 VOSS 'Elektronische Sicherheitssteuerungen'**

## Beschreibung

Die vorliegende Erfindung befaßt sich mit einem Verfahren und einer Vorrrichtung zur Ansteuerung und Fehlerrückmeldung eines elektrischen Bauelements, insbesondere mit einem integrierten Leistungsschalter, der neben einer Zustandrückmeldung auch die Möglichkeit der Ansteuerung durch zwei Mikroprozessoren bietet und dennoch mit einem fünfpoligen Gehäuse auskommt.

Die EP 0 418 665 A1 zeigt eine Schaltungsanordnung zur Ansteuerung und Fehlerrückmeldung eines elektrischen Verbrauchers mit zwei Mikrocomputern, einer Ansteuer- und Rückmeldeschaltung und einem Leistungstransistor, der den Verbraucher ein- und ausschaltet. Die Ansteuer- und Rückmeldeschaltung hat zwei Steuereingänge, von denen der eine unidirektional und der andere bidirektional arbeitet. Der unidirektionale Anschluß kann nur Signale von einem der Computer zu der Ansteuer- und Rückmeldeschaltung verarbeiten, während der bidirektionale Anschluß auch Rückmeldungen zu einem der Mikrocomputer durchgeben kann. Die Ansteuerund Rückmeldeschaltung enthält weiterhin mehrere Detektoren, die den Betriebszustand des elektrischen Verbrauchers, wzb. den durch ihn fließenden Strom messen. Die Umschaltung der Richtung des bidirektionalen Anschlusses erfolgt aufgrund des logischen Zustandes des unidirektionalen Anschlusses.

Derartige Verfahren und Vorrichtungen sind in sicherheitsrelevanten Systemen, z.B. in Antiblockiersystemen in Kraftfahrzeugen bekannt und sind häufig als zwei Prozessorsysteme ausgebildet. Bei diesen Zweiprozessorsystemen wirkt jeder der beiden Prozessoren steuernd auf die Leistungsendstufen zur Ansteuerung der Aktuatoren ein. Die Aktuatoren können beispielsweise Magnetventile sein. Aus Gründen der Sicherheit muß sich hierbei der Prozessor durchsetzen, der die Leistungsendstufe abschalten soll. Gleichzeitig ist eine Rückmeldeleitung von der Leistungsendstufe zu einem oder beiden Mikroprozessoren notwenig, um Betriebs- und Fehlerzustände der Ausgänge bzw. der Last zu erkennen um darauf reagieren zu können.

Im Stand der Technik sind Schaltungen bekannt, in denen dem Steuereingang der Leistungsendstufe ein Gatterbaustein vorgeschaltet wird, der die Steuersignale der beiden Mikroprozessoren miteinander verknüpft. Hierbei wird es als nachteilig empfunden, daß neben dem erhöhten Bauteilaufwand ein Fehler am Steuereingang der Leistungsendstufe die Steuersignale beider Prozessoren unwirksam macht.

Eine weitere übliche Variante der bekannten Schaltungen besteht in der Verwendung einer Leistungsendstufe mit einer größeren Anzahl von Anschlüssen, um neben der Rückmeldeleitung zwei Steuerleitungen zur Verfügung zu haben. Hierbei wirkt sich die erhöhte Anzahl der Anschlüsse einerseits kostenungünstig und andererseits als technisch schwieriger zu verarbeiten aus.

Daher ist es Aufgabe der vorliegenden Erfindung, ein Verfahren und eine Vorrichtung bereitzustellen, die es gestatten, einen integrierten Baustein einfach und kostengünstig herzustellen, daß dadurch die Anzahl der Anschlußkontakte des Bausteins herabgesetzt werden kann.

Diese Aufgabe wird erfindungsgemäß mit den kennzeichnenden Merkmalen des Anspruchs 1 und 5 gelöst.

Der erfindungsgemäße, nach dem obigen Verfahren arbeitende integrierte fünfpolige Leistungsschalter, der insbesondere durch einen ersten Mikrocomputer und einen zweiten Mikrocomputer angesteuert wird und zwei Steuereingänge aufweist, ist dadurch gekennzeichnet, daß der eine Steuereingang unidirektional und der zweite Steuereingang bidirektional ausgebildet ist, wobei der zweite Steuereingang als Zustandsrückmeldeanschluß verwendet wird.

Von besonderer Wichtigkeit für die vorliegende Erfindung ist es, daß der bidirektionale Anschluß in der Lage ist, mindestens zwei unterschiedliche sogenannte LOW-Pegel ($U_2, U_3$) zu unterscheiden. Als besonders vorteilhaft für die vorliegende Erfindung wirkt es sich dabei aus, daß die zu vergleichende Spannungspegel am Komparator mittels zweier Spannungsteiler ($R_1, R_2; R_3, R_4$) definiert werden. Dabei wird die Vergleichsspannung am Komparator durch den Spannungsteiler mit den Widerständen $R_3$ und $R_4$ gebildet, die dadurch entstehende Spannung $U_4$ soll zwischen der ersten LOW-Pegel-Spannung ($U_2$) und der zweiten LOW-Pegel-Spannung ($U_3$) liegen. Ein weiterer entscheidender Vorteil der vorliegenden Erfindung ist darin zu sehen, daß eine Rückmeldelogik einen Transistor schaltet, der bei Durchgang die bidirektionale Steuerleitung hochlegt, d.h. auf einen HIGH-Pegel bringt.

Je nach Zustand der Rückmeldelogik wird demnach der Transistor gesperrt oder durchgeschaltet. Der Zustand der Rückmeldelogik richtet sich nach dem augenblicklichen Betriebs- oder Fehlerfall des Leistungsschalters bzw. der Last.

Vorteilhaft für die vorliegende Erfindung wirkt sich ferner die Tatsache aus, daß die Steuerleitungen des integrierten Leistungsschalters intern mittels einer Logik derart verknüpft sind, daß ein Signal zum Sperren des Leistungsausgangs bevorzugt wird und sich unabhängig vom Pegel der anderen Steuerleitung stets durchsetzt, so daß die verwendeten Mikroprozessoren unabhängig voneinander den sicheren, d.h. den abgeschalteten Zustand der Leistungsendstufe herbeiführen können.

Durch diese erfindungsgemäße Ausführungform eines integrierten Leistungsschalters, bei dem eine Steuerleitung Signale bidirektional übertragen kann, ist es möglich, diese Leitung sowohl als Steuer-, als auch als Rückmeldeleitung zu verwenden. Darüber hinaus wird hierdurch die Möglichkeit eröffnet, den erfindungsgemäßen integrierten Leistungsschalter in einem fünfpoligen Standardgehäuse unterzubringen.

Weitere vorteilhafte erfindungserhebliche Ausgestaltungen ergeben sich aus den Unteransprüchen.

Im nun Folgenden wird die vorliegende Erfindung anhand von Zeichnungen näher erläutert.

Es zeigen

Fig.1    ein Blockschaltbild der erfindungsgemäßen Vorrichtung;

Fig.2    ein Prinzipschaltbild des erfindungsgemäßen integrierten fünfpoligen Leistungsschalters (1);

Fig.3    ein Pegel-Diagramm, bei dem auf der Ordinate die Pegelspannungen aufgezeichnet sind und auf der Abszisse der Zustand der bidirektionalen Steuerleitung.

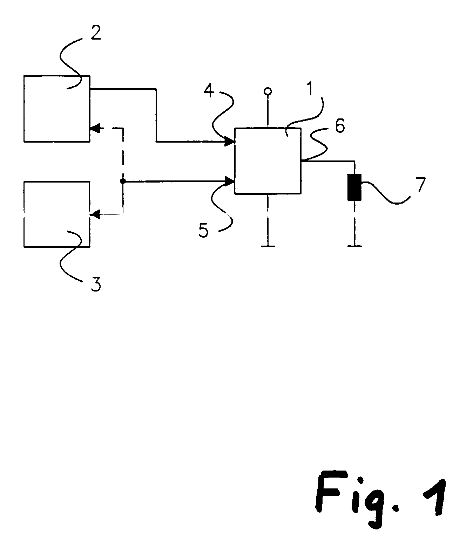

Fig.1 zeigt ein Blockschaltbild mit den wesentlichen Bauelementen. Die erfindungsgemäße integrierte Leistungsendstufe 1 weist einen Hauptsteuereingang 4 zur Ansteuerung durch den Mikroprozessor 2 und einen Rückmeldeanschluß 5 auf. Die Rückmeldeleitung 5 bzw. der Rückmeldeanschluß 5 meldet einem oder beiden Mikroprozessoren 2,3 den Zustand der Endstufe, bzw. den Zustand der gewählten entsprechenden Last 7. Insbesondere werden Fehlerfälle, wie Leitungsunterbrechung, Kurzschluß nach Masse oder Kurzschluß nach Versorgungsspannung an die Mikroprozessoren über die bidirektionale Übertragungsleitung 5 gemeldet.

Da die eine Leitung 5 bidirektional ausgebildet ist, kann diese Steuerleitung 5 vom Mikroprozessor 3 sowohl als Steuerleitung als auch als Rückmeldeleitung verwendet werden.

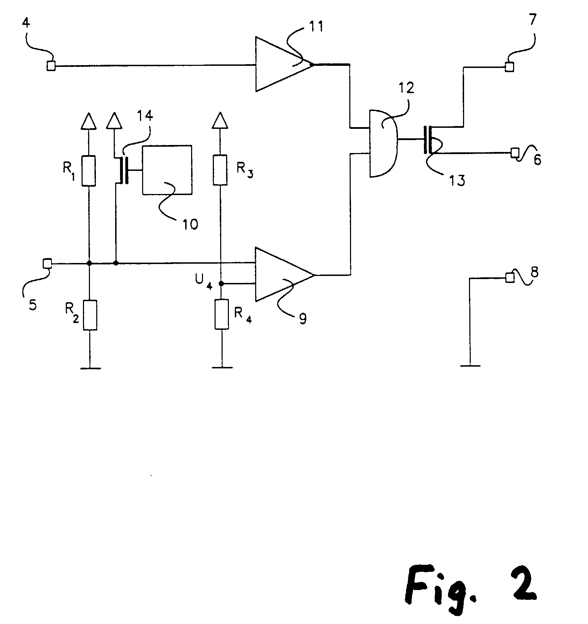

In Fig.2 ist das Prizipschaltbild des erfindungsgemäßen integrierten fünfpoligen Leistungsschalters 1 dargestellt. Die Bidirektionalität der Steuerleitung 5 wird durch die Verwendung zweier unterschiedlicher LOW-Pegel $U_2$ und $U_3$ erreicht. Durch die Rückmeldelogik 10 kann je nach Zustand der Rückmeldelogik 10 der Transisitor 14 gesperrt oder durchgeschaltet werden. Bei Durchschaltung des Transistors 14 wird die bidirektionale Steuerleitung 5 auf einen HIGH-Pegel ($U_1$) gehoben. In seiner Eigenschaft als Ausgang schaltet der Anschluß 5 je nach Zustand der Rückmeldelogik 10 zwischen dem HIGH-Pegel $U_1$, der den Wert der Versorgungsspannung annimmt, und dem LOW-Pegel $U_2$, der durch den Spannungsteiler $R_1$ und $R_2$ eingestellt wird, hin und her.

Für den Fall, daß extern auf die bidirektionale Steuerleitung 5 ein LOW-Pegel ($U_3$) gelegt wird, der unterhalb der am Komparator 9 durch den Spannungsteiler $R_3$ und $R_4$ eingestellten Vergleichsspannung ($U_4$) liegt, so wird diese LOW-Pegel-Änderung nach $U_3$ vom Komparator 9 erkannt und als Eingangssignal gewertet. Für die Vergleichsspannung $U_4$ gilt die Bedingung

$$U_3 < U_4 < U_2,$$

d.h. mit anderen Worten, daß die Vergleichsspannung des Komparators 9 zwischen dem ersten LOW-Pegel ($U_2$) und dem zweiten LOW-Pegel ($U_3$) zu liegen hat.

Ferner sind die Steueranschlüsse 4,5 intern derart verknüpft, daß ein Signal zum Sperren des Leistungsausgangs 6 bevorzugt ist und sich unabhängig vom Pegel der anderen Steuereingänge stets durchsetzt, so daß beide Mikroprozessoren 2,3 unabhängig voneinander den sicheren, d.h. den abgeschalteten Zustand herbeiführen können.

Infolge der bidirektionalen Ausführung einer der Steuerleitungen als Steuer- und Rückmeldeanschluß ist es möglich, den erfindungsgemäßen integrierten Leistungsschalter in einem fünfpoligen Standardgehäuse unterzubringen.

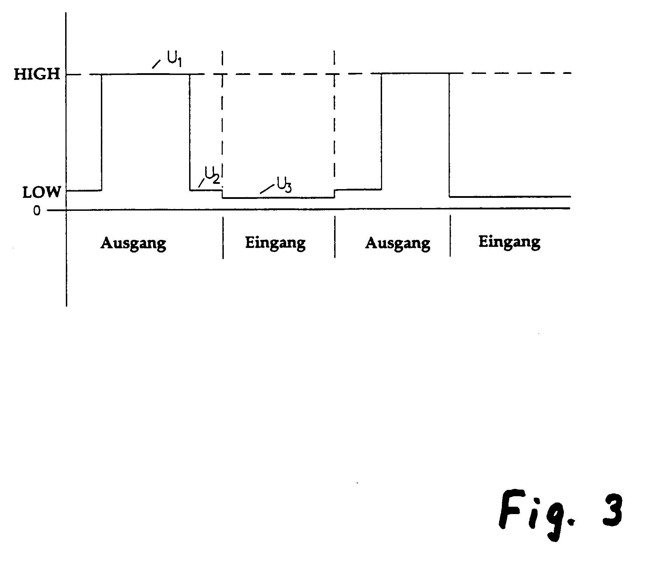

In Fig.3 ist ein Pegeldiagramm dargestellt, in dem die unterschiedlichen Pegelzustände ($U_1, U_2, U_3$) zu erkennen sind. Als LOW-Pegel wird gewöhnlich eine Spannung bezeichnet, die gleich oder unterhalb einer bestimmten Normspannung liegt. Im vorliegenden Fall ist dieses die Spannung $U_2$. Als HIGH-Pegel ist in der Regel die Versorgungsspannung anzusehen, die im vorliegenden Fall mit $U_1$ bezeichnet ist.

Erfindungsgemäß wird nun mit dem Spannungsteiler, der aus den Widerständen $R_3$ und $R_4$ besteht eine Vergleichsspannung $U_4$ eingestellt, die als Referenzspannung dem Komparator 9 auf seinen negativen Eingang gegeben wird. Bei Änderung des Spannungspegels am positiven Eingang des Komparators 9, d.h. am bidirektionalen Steuereingang 5 wirkt die bidirektionale Steuerleitung 5 je nach Spannungspegel entweder als Ausgang, sofern der LOW-Spannungspegel $U_2$ erreicht wird oder als Eingang, sofern der LOW-Spannungspegel $U_3$ erreicht wird, der kleiner ist als die Referenzspannung $U_4$ am negativen Eingang des Komparators 9. Dieser Fall tritt ein, wenn beispielsweise ein Kurzschluß gegen Masse auftritt. Solange dieser Pegel erhalten bleibt, bleibt die bidirektionale Steuerleitung 5 als Eingang "wirksam". Wird der ursprüngliche Zustand ($U_2$) oder ($U_1$) wieder hergestellt, so wirkt die bidirektionale Steuerleitung als "Ausgang". Somit wird der Leistungstransistor 13 durch die logische Verknüpfung mit Hilfe des Logikelements 12 je nach Zustand der bidirektionalen Steuerleitung gesperrt oder durchgeschaltet, so daß der Anschluß 6 über den Leistungstransistor 13 an dem Leistungsanschluß 7 liegt. Der Anschluß 8 stellt die Masse dar.

Der oben beschriebene integrierte fünfpolige Leistungsschalter 1 kann auch in sogenannten Einprozessor-Systemen vorteilhaft eingesetzt werden, da sich auch hier die Möglichkeit einer diversitären Ansteuerung, z.B. über zwei unterschiedliche Prozessor-Ports oder durch den Prozessor und eine zusätzliche Überwachungsschaltung ergibt.

Kurzfassung:

Mit der vorliegenden Erfindung wird ein Verfahren bzw. ein nach diesem Verfahren arbeitender integrierter fünfpoliger Leistungsschalter (1) vorgestellt. Durch die Einführung einer bidirektionalen Steuerleitung (5) ist es möglich, den gesamten integrierten Leistungsschalter in einem fünfpoligen Standardgehäuse unterzubringen. Hierdurch werden einerseits die Herstellungskosten gesenkt und andererseits eine Verarbeitungserleichterung erreicht.

**Bezugszeichenliste**

1  Integrierter fünfpoliger Leistungschalter
2  Erster Mikroprozessor
3  Zweiter Mikroprozessor
4  Hauptsteuerleitung
5  Bidirektionale Steuerleitung
6  Leistungsanschluß
7  Leistungsspannungsanschluß
8  Masseanschluß
9  Komparator
10  Rückmeldelogik
11  Eingangspuffer
12  Logikelement
13  Transistor
14  Transistor

**Patentansprüche**

1. Verfahren zur Ansteuerung durch mindestens einen Mikroprozessor (2,3) und zur Fehlerrückmeldung an diesem mindestens einen Mikroprozessor (2,3), wobei ein angesteuertes und rückmeldendes elektrisches Bauelement (1) zwei Steuereingänge (4,5) aufweist, von denen ein Steuereingang (4) unidirektional und der andere Steuereingang (5) bidirektional betrieben und damit als Fehlerrückmeldeanschluß verwendet wird, **dadurch gekennzeichnet,** daß der bidirektionale Steuereingang (5) dadurch in beiden Richtungen benutzt wird, daß für jede Richtung unterschiedliche elektrische Steuerspannungen benutzt werden, und zwar für die Richtung vom mindestens einem Mikroprozessor (2,3) zum elektrischen Bauelement (1) eine erste Spannung (U$_2$) und für die entgegengesetzte Rückrichtung zu mindestens einem Mikroprozessor (2,3) eine zweite Spannung (U$_3$), die niedriger ist als die erste Spannung (U$_2$).

2. Verfahren nach Anspruch 1, **dadurch gekennzeichnet,** daß der bidirektionale Steuereingang (5) mittels eines Komparators (9) in seiner Wirkung als Eingangs- oder Ausgangsanschluß umgeschaltet wird, wobei eine Vergleichsspannung (U$_4$) des Komparators (9) durch einen Spannungsteiler (R$_3$, R$_4$) definiert ist und diese Vergleichsspannung (U$_3$) zwischen der ersten Spannung (U$_2$) und der zweiten Spannung (U$_3$) liegt.

3. Verfahren nach Anspruch 2, **dadurch gekennzeichnet,** daß der Komparator (9) ein Signal liefert, das einem Logikbaustein (12) zugeführt wird, wenn die Spannung an dem bidirektionalen Anschluß (5) die Vergleichsspannung (U$_4$) unterschreitet und daß ein einen elektrischen Verbraucher (7) ansteuernder Leistungstransistor (13) gesperrt wird, wenn beide Eingänge des Logikbausteins (12) eine Spannung mit einem Pegel einer logischen Null aufweisen, wobei der bidirektionale Steuereingang (5) als Eingangsanschluß für den mindestens einen Mikrocomputer (2,3) wirksam ist.

4. Verfahren nach Anspruch 3, **dadurch gekennzeichnet,** daß der Leistungstransistor (13) durch beide Steuereingänge (4,5) uanbhängig voneinander gesperrt werden kann und daß dasjenige Ausgangssignal des Logikbausteins (12), das den Leistungstansistor (13) sperrt, bevorzugt ist und sich unabhängig vom Pegel des jeweils anderen Steuereinganges (4 oder 5) durchsetzt.

5. Schaltungsanordnung zur Ansteuerung eines elektrischen Verbrauchers (7) durch mindestens einen Mikrocomputer (2,3) und zur Fehlerrückmeldung an diesen mindestens einen Mikrocomputer (2,3) mit mindestens zwei Mikrocomputern (2,3) und einem integrierten fünfpoligen Leistungsschalter (1), der mindestens zwei mit einem oder beiden Mikrocomputern (2,3) verbundene Steuereingänge (4,5) aufweist, von denen der erste Steuereingang (4) unidirektional und der zweite Steuereingang bidirektional ausgebildet ist, so daß der zweite Steuereingang (5) auch als Zustandsrückmeldeanschluß verwendbar ist, **gekennzeichnet durch**

einen an den zweiten Steueranschluß (5) angeschlossenen Komparator (9) dessen Vergleichsanschluß mittels eines Spannungsteilers (R$_3$, R$_4$) auf eine vorbestimmte Spannung (U$_4$) eingestellt ist,
**durch** einen zweiten Spannungsteiler (R$_1$, R$_2$), der den zweiten Steueranschluß (5) auf eine erste Spannung (U$_2$) vorspannt,
**durch** eine Rückmeldelogik (10), die einen Transistor (14) schaltet, wobei der Zustand der Rückmeldelogik (10) sich nach dem augenblicklichen Betriebs- oder Fehlerfall eines den Verbraucher (7) ansteuernden Leistungstransistors (13) oder den Verbraucher (7) richtet,
**durch** ein Logikelement (12), dessen einer Eingang mit dem Ausgang des Komparators (9) und dessen anderer Eingang mit dem unidirektionalen Steuereingang (4) verbunden ist und weiter dadurch gekennzeichnet, daß der mindestens eine Mikrocomputer (2,3) dem bidirektionalen Steuereingang (5) eine Zweite Spannung ($U_3$) zuführt, die kleiner ist als die erste Spannung ($U_2$).

6. Schaltungsanordnung nach Anspruch 5, **dadurch gekennzeichnet,**
daß das den Leistungstransistor (13) ansteuernde Logikelelent (12) den Leistungstransistor (13) immer dann sperrt, wenn an mindestens einem seiner Eingangsanschlüsse ein Sperrsignal anliegt.

7. Schaltungsanordnung nach Anspruch 5 oder 6, **dadurch gekennzeichnet,**
daß der bidirektionale Steuereingang (5) mit dem ersten und dem zweiten Mikrocomputer (2,3) sowie auch mit jedem weiteren Mikrocomputer verbunden ist.

## Claims

1. A method of control using at least one microprocessor (2, 3) and of fault feedback to this at least one microprocessor (2, 3), a controlled and feedback-supplying electrical component (1) comprising two control inputs (4, 5), of which one control input (4) is unidirectionally and the other control input (5) bidirectionally operated and thus used as a fault feedback terminal, characterised in that the bidirectional control input (5) is used in both directions, in that, for each direction, different electrical control voltages are used, namely a first voltage ($U_2$) for the direction from the at least one microprocessor (2, 3) to the electrical component (1) and a second voltage ($U_3$), which is lower than the first voltage ($U_2$), for the opposite return direction to at least one microprocessor (2, 3).

2. A method according to claim 1, characterised in that the bidirectional control input (5) is switched in its function as input or output terminal by means of a comparator (9), a reference voltage ($U_4$) of the comparator (9) being defined by a potentiometer ($R_3$, $R_4$) and this reference voltage ($U_4$) lying between the first voltage ($U_2$) and the second voltage ($U_3$).

3. A method according to claim 2, characterised in that the comparator (9) supplies a signal, which is supplied to a logic component (12) if the voltage at the bidirectional terminal (5) falls below the reference voltage ($U_4$) and a power transistor (13) controlling an electrical consumer (7) is blocked if both inputs of the logic component (12) have a voltage with a level of logical zero, the bidirectional control input (5) functioning as an input terminal for the at least one microprocessor (2, 3).

4. A method according to claim 3, characterised in that the power transistor (13) can be blocked by both control inputs (4, 5) independently of one another, and the output signal of the logic component (12) which blocks the power transistor (13) takes precedence irrespective of the level of the respective other control input (4 or 5).

5. A circuit arrangement for controlling an electrical consumer (7) by at least one microcomputer (2, 3) and for fault feedback to this at least one microcomputer (2, 3) with at least two microcomputers (2, 3) and an integrated five-pole circuit breaker (1), which comprises at least two control inputs (4, 5) connected to one or both microcomputers (2, 3), of which the first control input (4) is unidirectional and the second control input is bidirectional, so that the second control input (5) can also be used as a condition feedback terminal, characterised by:

- a comparator (9) which is connected to the second control terminal (5) and whose comparator terminal is set to a predetermined voltage ($U_4$) by means of a potentiometer (($R_3$, $R_4$),
- a second potentiometer ($R_1$, $R_2$), which biases the second control terminal (5) to a first voltage ($U_2$),
- a feedback logic (10), which switches a transistor (14), the state of the feedback logic (10) being determined according to the instantaneous operating or fault condition of a power transistor (13) controlling the consumer (7) or by the consumer (7),
- a logic element (12), whose first input is connected to the output of the comparator (9) and whose other input is connected to the unidirectional control input (4) and further characterised in that the at least one microcomputer (2, 3) supplies a second voltage ($U_3$), which is smaller than the first voltage ($U_2$), to the bidirectional control input (5).

6. A circuit arrangement according to claim 5, characterised in that the logic element (12) controlling the power transistor (13) always blocks the power transistor (13) when a blocking signal is supplied to at least one of its input terminals.

7. A circuit arrangement according to claim 5 or 6, characterised in that the bidirectional control input (5) is connected to the first and the second microcomputer (2, 3) and also to each further microcomputer.

## Revendications

1. Procédé pour la commande par au moins un microprocesseur (2, 3) et pour la signalisation en retour des erreurs à ce au moins un microprocesseur (2,3), dans lequel un composant électrique (1) commandé et émettant un signal de retour présente deux entrées de commande (4, 5) dont une entrée (4) fonctionne de façon unidirectionnelle et l'autre entrée (5) de façon bidirectionnelle, servant ainsi de branche de signalisation en retour des erreurs, caractérisé en ce que

l'entrée de commande bidirectionnelle (5) est utilisée dans les deux directions à l'aide de tensions électriques de commande différentes pour chaque direction, c'est-à-dire une première tension ($U_2$) pour la direction depuis ledit au moins un microprocesseur (2, 3) vers le composant électrique (1) et une deuxième tension ($U_3$) plus faible que la première tension ($U_2$) pour la direction opposée en retour vers ledit au moins un microprocesseur (2, 3).

2. Procédé selon la revendication 1, caractérisé en ce que l'entrée de commande bidirectionnelle (5) est commutée à l'aide d'un comparateur (9) dans sa fonction de branche d'entrée ou de sortie, une tension de référence ($U_4$) du comparateur (9) étant définie par un diviseur de tension ($R_3$, $R_4$) et cette tension de référence ($U_4$) se situant entre la première tension ($U_2$) et la deuxième tension ($U_3$).

3. Procédé selon la revendication 2, caractérisé en ce que le comparateur (9) fournit un signal qui est acheminé vers un composant logique (12) quand la tension sur la liaison bidirectionnelle (5) descend en dessous de la tension de référence ($U_4$) et en ce qu'un transistor de puissance (13) commandant une charge électrique (7) est bloqué quand les deux entrées du composant logique (12) présentent une tension avec un niveau logique zéro, l'entrée de commande bidirectionnelle (5) agissant comme branche d'entrée pour ledit au moins un microprocesseur (2, 3).

4. Procédé selon la revendication 3, caractérisé en ce que le transistor de puissance (13) peut être bloqué indépendamment par l'une des deux entrées de commande (4, 5) et en ce que le signal de sortie du composant logique (12) bloquant le transistor de puissance (13) est prioritaire et s'impose indépendamment du niveau de l'autre entrée de commande (4 ou 5).

5. Dispositif pour la commande d'une charge électrique (7) par au moins un microprocesseur (2, 3) et pour la signalisation en retour des erreurs à ce au moins un microprocesseur (2, 3), avec au moins deux microprocesseurs (2, 3) et un commutateur de puissance intégré (1) à cinq pôles qui présente au moins deux entrées de commande (4, 5) reliées avec l'un ou les deux microprocesseurs (2, 3), dont la première entrée de commande (4) est unidirectionnelle et la deuxième entrée de commande est bidirectionnelle, de sorte que la deuxième entrée de commande (5) peut également servir de branche de signalisation d'état en retour, caractérisé par un comparateur (9) raccordé à la deuxième branche de commande (5), la borne de référence du comparateur étant réglée à une tension prédéterminée ($U_4$) à l'aide d'un diviseur de tension ($R_3$, $R_4$),

par un deuxième diviseur de tension ($R_1$, $R_2$) qui polarise la deuxième liaison de commande (5) à une première tension ($U_2$), par une logique de signalisation en retour (10) commandant un transistor (14), l'état de la logique de signalisation en retour (10) s'adaptant à l'état de fonctionnement ou d'erreur instantané d'un transistor de puissance (13) commandant la charge (7) ou à celui de la charge (7), par un élément logique (12) dont l'une des deux entrées est reliée à la sortie du comparateur (9) et dont l'autre entrée est reliée à l'entrée de commande (4) unidirectionnelle, et également caractérisé en ce que

ledit au moins un microprocesseur (2, 3) alimente l'entrée de commande bidirectionnelle (5) par une deuxième tension ($U_3$) inférieure à la première tension ($U_2$).

6. Dispositif de commande selon la revendication 5, caractérisé en ce que l'élément logique (12) commandant le transistor de puissance (13) bloque le transistor de puissance (13) à chaque fois qu'un signal de coupure est appliqué à au moins une de ses branches d'entrée.

7. Dispositif de commande selon la revendication 5 ou 6, caractérisé en ce que l'entrée de commande bidirectionnelle (5) est reliée au premier et au deuxième microprocesseur (2, 3) ainsi qu'à chaque autre microprocesseur.

Fig. 1

Fig. 2

Fig. 3